# EUROPÄISCHE PATENTSCHRIFT

(11) **EP 2 578 993 B1**
(45) Veröffentlichungstag und Bekanntmachung des Hinweises auf die Patenterteilung: **15.01.2014**
(21) Anmeldenummer: 11184194.6
(22) Anmeldetag: 06.10.2011
(51) Int. Cl.: G01B 5/24, G01C 1/00, G01C 15/00, G01C 19/38

(54) **Goniometer mit grafischem Informationswiedergabemittel zur Bereitstellung von Information**
Goniometer with graphical information reproduction means for producing information
Goniomètre doté de moyens de reproduction d'informations graphiques pour la présentation d'informations

(43) Veröffentlichungstag der Anmeldung: 10.04.2013
(73) Patentinhaber: Vectronix AG, 9435 Heerbrugg (CH)
(72) Erfinder: Hohl, Reto, CH-9435 Balgach (CH); Hegetschweiler, Simon, CH-9445 Rebstein (CH); Wälti, Felix, CH-9443 Widnau (CH)
(74) Vertreter: Kaminski Harmann

(56) Entgegenhaltungen:
- EP-A1- 0 250 608
- DE-A1- 3 141 405
- DE-U1- 20 215 235
- JP-A- 9 101 152
- "GonioLight - Digital Observation Station", 2005, Vectronix AG, Heerbrugg, Switzerland, XP055076602, * the whole document *

## Beschreibung

Die Erfindung betrifft ein Goniometer nach dem Oberbegriff des Anspruchs 1, ein System aus Goniometer und Beobachtungsgerät nach Anspruch 11 und ein Initialisierungsverfahren für ein Goniometer nach Anspruch 13.

"Goniometer" bezeichnet ein Gerät, mit welchem zum einen Winkel messbar sind und zum anderen die Rotation eines Objekts zu einer präzisen Winkelposition durchführbar ist. Das Wort "Goniometer" ist ein aus dem Griechischen abgeleiteter, zusammengesetzter Begriff aus den Worten "gonio" (= Winkel) und "metron" (= messen). Goniometer bezieht sich - nach heutigem Verständnis - auf ein Gerät zur präzisen Rotation eines Objekts (Beobachtungsgerät) um eine feste Achse und ein Messen des der jeweiligen Rotation zugeordneten Winkels. Goniometer kommen insbesondere im Zusammenhang mit leistungsfähigen Beobachtungsgeräten für militärische oder geodätische Zwecke zum Einsatz. Dabei ist wichtig, dass die Systeme handlich, schnell und einfach zu bedienen sowie möglichst kompakt und leicht sind. Goniometer sind im Rahmen der folgenden Beschreibung und somit der vorliegenden Erfindung als für den Einsatz im Feld konzipierte, robuste Geräte, insbesondere zur Bestimmung von Azimutwinkeln von aufgesetzten Geräten, zu verstehen.

Als eine mögliche Ausführung eines Goniometers sei hierzu ein Stativ mit Stativaufsatz erwähnt, dessen vertikale Drehachse (in der Vermessung auch als Stehachse bezeichnet) über eine nordreferenzierbare Winkelmessung verfügt. Daran können unterschiedliche Beobachtungsgeräte, etwa Binokulare, Monokulare, Kameras, Entfernungsmesser, Nachsichtgeräte, kleinere Waffensysteme, etc. montiert werden. Beispielsweise können derartige derzeit verfügbare Beobachtungsgeräte - zusätzlich zu einer Tagbeobachtungsfunktion - als weitere Funktionen aufweisen: Zielmarkierung für militärische Anwendungen oder zu Jagdzwecken, integrierte Entfernungs- und Richtungsmesser, ein elektronisches Display zum Bereitstellen von Information - insbesondere wobei ein Displaybild mit dem Tagsichtbild überlagerbar ist -, eine Nachtsichtfunktion, etc. Dadurch ist es z.B. möglich, ein Bild einer Kamera, Standortinformation beispielsweise in Form einer Karte, gemessene Entfernungen oder Richtungen, gespeicherte Informationen bzgl. eines anvisierten Zielobjekts - wie z.B. Verwundbarkeitsstellen eines feindlichen Panzers - oder Temperatur- und Wetterinformationen anhand des elektronischen Displays dem Benutzer bereitzustellen. Insbesondere sind diese Geräte oft in Form von Ferngläsern bzw. Feldstechern mit den genannten Spezialfunktionen für jeweilige spezielle Verwendungszwecke ausgebildet.

Durch entsprechende Datenschnittstellen können Informationen zwischen den Geräten, d.h. Goniometer und darauf aufgesetztem Beobachtungsgerät, übertragen und verknüpft werden und beispielsweise eine mittels im Gerät verfügbarer Sensoren bestimmbare nordreferenzierte Azimutausrichtung gemeinsam mit einer Elevationsmessung und einer Entfernungsmessung zur Bestimmung von Zielkoordinaten genutzt werden. Der azimutale Winkel kann dabei z.B. mittels eines Winkelencoders gemessen werden, welcher eine jeweilige Winkelstellung einer feststehenden Basis relativ zu einem zur Basis rotierbaren Aufbau misst. Ferner kann ein Elevationswinkel durch einen zweiten Winkelencoder, der beispielsweise an einem Drehgelenk am Aufbau angeordnet ist, oder mit einem Neigungssensor im Beobachtungsgerät bestimmt werden. Ist weiters, beispielsweise über GNSS (Global Navigation Satellite System), z.B. GPS oder Galileo, der Gerätestandort bekannt, können ferner Zielkoordinaten in einem kartographischen Koordinatensystem bestimmt werden.

Zur Bestimmung einer Nordausrichtung des Goniometers kann beispielsweise eine magnetische Kompassausrichtung herangezogen werden. Speziell in Innenräumen von Gebäuden, Stahlkonstruktionen, Tunneln oder in unterirdischen Einrichtungen sowie nahe bei elektrischen Anlagen ist jedoch eine hinreichend genaue Magnetkompassmessung vielfach unmöglich. Insbesondere ist die Materialauswahl für die Konstruktion eines entsprechenden Messgeräts beschränkt auf diejenigen Materialen, welche amagnetisch sind und somit die Nordbestimmung nicht beeinflussen.

Aus der DE 10 2005 017 320 A1 ist beispielsweise ein Beobachtungsgerät mit einem aus amagnetischem Material ausgebildeten Stativ zum Anzielen eines Ziels mit einem Laserentfernungsmesser und einem digitalen Magnetkompass bekannt. Die Ausrichtung der Anordnung relativ zur Nordrichtung wird hier mittels des Magnetkompasses, der drei gerätefeste Magnetfeldsensoren aufweist, bestimmt.

Neben einer magnetischen Nordfindung, ist auch eine Nordfindung durch Bestimmung der Erddrehachse bekannt, welche per Definition den geographischen Nord- und Südpol verbindet. Dieses Prinzip ist seit der ersten Konstruktion eines Foucaultschen Pendels durch Jean Bernard Lèon Foucault im Jahre 1851 bekannt.

Technisch nutzbar wurde die Bestimmung der Erddrehachse vor allem durch Weiterentwicklungen im Bereich von gyroskopischen Sensoren, angefangen bei Kreisel-Gyroskopen über Laserring- und Faser-Gyroskope bis hin zu den heutigen MEMS-Gyroskopen (z.B. Vibrationsgyroskop), welche beispielsweise nach dem HRG-Prinzip (= Hemispherical Resonator Gyroscope) oder anderen bekannten Technologien eine Nordbestimmung durchführbar machen. Im Gegensatz zur Verwendung von Magnetsensoren, kann durch die Verwendung von Drehratensensoren zur Bestimmung des Nordens beispielsweise das Stativ für ein Beobachtungsgerät bzw. das Goniometer auch aus Materialen gefertigt sein, welche magnetische Eigenschaften aufweisen.

Die US 5,272,922 offenbart in diesem Zusammenhang ein mit einem Winkelmesser kombiniertes Gyroskop zur Bestimmung des geografischen Nordpols, wobei ein solches Gerät gemäss der Offenbarung im Bergbau, der Vermessung oder zur Zielerfassung zum Einsatz kommen kann. Durch diese Kombination können die Nordrichtung als Referenz und die durch den Winkelmesser bestimmten Winkel in Relation zum Norden angegeben werden.

Zur Bestimmung des geographischen Nordpols relativ zur Basis des Goniometers kann beispielsweise eine gleichzeitige Messung mit mindestens zwei zueinander azimutal gewinkelt angeordneten Gyroskopen oder mit nur einem einachsigen gyroskopischen Sensor (Drehratensensor) erfolgen, wobei im Allgemeinen mit nur einem Sensor zumindest zwei Messungen in jeweils unterschiedlichen azimutalen Winkelstellungen einer Drehachse des Sensors (relativ zur Basis) durchgeführt werden sollten.

Die EP 2 239 540 A1 schlägt hierzu ein Gyroskop zur Verwendung mit einem Goniometer vor, wobei das Goniometer einen Winkelmesssensor zur Bestimmung der azimutalen Winkelstellung aufweist. Das Gyroskop ist dabei vorgesehen um die Nordrichtung mittels zweier Messungen in jeweils einer von zwei Winkelstellungen des Goniometers zu ermitteln.

Für eine hohe Genauigkeit bei der Bestimmung einer Nordrichtung aus zwei Messungen ist es vorteilhaft, eine definierte relative Winkelstellung zwischen den beiden Messpositionen einzustellen, bei der die Einflüsse auf den Sensor mit der jeweiligen Messung möglichst unabhängig ermittelbar sind und somit eine genaue Bestimmung des Nordens erfolgen kann. In diesem Zusammenhang sind z.B. eine erste Ausrichtung des Aufbaus und eine zweite Ausrichtung relativ zur ersten in einem Winkel von z.B. 90° oder 120° geeignet, wobei in jeder Ausrichtung eine Messung durch das im Aufbau vorgesehene Gyroskop erfolgt. Da Goniometer meist in robuster Ausführung ohne Motorisierung vorliegen, kann ein Schwenken von der ersten zur zweiten Winkelstellung manuell erfolgen.

Zum Erreichen der jeweiligen, insbesondere vorteilhaften, Winkelstellung kann ein Benutzer mit Hilfe einer am Gerät ausgegebenen Information ein jeweilig erforderliches Schwenken des Aufbaus relativ zur Basis vornehmen. Dabei kann nachteilhaft sein, dass eine grafisch angezeigte Information beim Einschwenken des Aufbaus in die jeweilige Messposition zumindest teilweise verdeckt bzw. sich aus dem Sichtfeld des Benutzers bewegt werden kann und damit dem Benutzer nicht fortlaufen bis zum Erreichen der Messposition bereitsteht. Weiters ist nachteilig, dass bei einer entsprechenden Drehung das leuchtende Display seine Ausrichtung so ändert, dass es von einem Feind in direkter Sichtlinie wahrgenommen werden kann und somit ein Standort des Goniometers leichter erkennbar wird. Durch z.B. eine Anordnung eines Displays an der Basis (und damit feststehender relativer Position zur Basis) des Goniometers könnte der Benutzer die Information zwar fortlaufend in einer Richtung bereitgestellt bekommen, jedoch ist hierbei nachteilig, dass die Integration des Displays in die Basis eine Anforderung an den dafür notwendigen Bauraum stellt, die hinsichtlich einer kompakten Gerätebauweise abzulehnen ist.

Es ist daher eine Aufgabe der vorliegenden Erfindung, eine verbessertes Goniometer zur Bereitstellung definierter und referenzierter Azimutwinkel bereitzustellen, wobei die Vorrichtung zur einer benutzerfreundlichen, kompakten und insbesondere für einen Benutzer fortlaufend wahrnehmbaren Informationsausgabe ausgestaltet ist.

Eine weitere Aufgabe der Erfindung ist es, ein verbessertes Goniometer bereitzustellen, welches mit einer Informationsausgabe zu einer robusten, schnellen, genauen und mit einer hohen Benutzfreundlichkeit durchführbaren Referenzierung der Vorrichtung ausgestattet ist.

Zudem ist es eine Aufgabe der Erfindung, dass eine Information zur Initialisierung eines Goniometers so bereitgestellt wird, dass während eines Initialisierungsvorgangs des Goniometers eine direkte Sichtverbindung zwischen einer grafischen Informationsausgabe und einem Feind vermieden wird.

Eine spezielle Aufgabe der Erfindung ist es, ein verbessertes Goniometer mit der Möglichkeit einer einfacheren und benutzerfreundlicheren Nordfindung bereitzustellen.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Goniometer mit zumindest einer eine Stehachse definierenden Basis, einem Aufbau, wobei der Aufbau um die Stehachse relativ zur Basis rotierbar ist, einem Winkelencoder zur Bestimmung einer Winkelstellung des Aufbaus relativ zur Basis und einer Steuerungs- und Verarbeitungseinheit. Ein durch einen Winkelencoder bzw. Winkelkodierer eines erfindungsgemässen Goniometers zu erfassender Winkelwert kann dabei magnetisch, kapazitiv oder optisch bestimmbar sein. Beispielsweise kann für eine optische Bestimmung eines vorliegenden Winkelstellungswerts eine Beleuchtung einer Codescheibe derart erfolgen, dass ein Muster auf einen Sensor projiziert wird und ein jeweiliges Muster eindeutig einer Winkelstellung oder inkrementellen Winkelstellungsänderung zuordenbar ist. Das Muster wird mit dem Sensor erfasst und daraus ein Winkelwert abgeleitet. Die Codescheibe kann dabei der Basis und der Sensor dem Aufbau (oder umgekehrt) zugeordnet sein.

Erfindungsgemäss weist der Aufbau ein grafisches elektronisches Informationswiedergabemittel mit mindestens zwei Anzeigezonen zur Anzeige einer Benutzerführungsinformation und/oder einer Messinformation auf, wobei eine erste der mindestens zwei Anzeigezonen des Informationswiedergabemittels in einer ersten radialen Ausrichtung relativ zur Stehachse am Aufbau angeordnet ist. Eine zweite der mindestens zwei Anzeigezonen des Informationswiedergabemittels ist in einer zur ersten radialen Ausrichtung unterschiedlichen zweiten radialen Ausrichtung relativ zur Stehachse am Aufbau angeordnet, wobei die erste radiale Ausrichtung und die zweite radiale Ausrichtung einen Winkel von mindestens 90° einschliessen. Zudem werden die mindestens zwei Anzeigezonen durch die Steuerungs- und Verarbeitungseinheit in Abhängigkeit von einem Erfüllen eines gespeicherten Winkelstellungskriteriums durch eine aktuelle Winkelstellung automatisch einzeln angesteuert.

Das erfindungsgemässe Goniometer stellt somit die Möglichkeit bereit, einen Azimutwinkel des Aufbaus relativ zur Basis mittels des vorgesehenen Winkelkodierers präzise messen zu können. Ausserdem wird eine Information bereitgestellt, welche z.B. einem Benutzer des Goniometers dazu dient eine erforderliche Winkelstellung am Gerät einzustellen und somit zur Benutzerführung heranziehbar ist. Die Information wird hierzu auf mindestens zwei, insbesondere drei, Anzeigezonen des Informationswiedergabemittels ausgegeben, wobei diese Zonen bzw. Displays jeweils an unterschiedlichen Seiten des Aufbaus angeordnet sein können und damit die Information aus unterschiedlichen Richtungen sichtbar ist. Zudem werden durch die Anordnung am Aufbau die Informationsanzeigen beim Rotieren bzw. Schwenken des Aufbaus relativ zur Basis entsprechend mitrotiert, wodurch ein Benutzer einen festen Standort beibehalten kann und z.B. bei einem Rotieren des Aufbaus um 90° die Information zuerst von der ersten Anzeigezone und nachdem diese Zone aus seinem Sichtfeld schwenkt von der zweiten Anzeigezone Informationen entnehmen kann. Dadurch wird das Anfahren bestimmter Winkelstellungen benutzerfreundlich ohne Änderung einer Position des Benutzers möglich.

Ferner werden die einzelnen Anzeigezonen abhängig vom Winkelstellungskriterium angesteuert. Das Winkelstellungskriterium kann in diesem Zusammenhang eine Entscheidungsregel sein wonach die Steuerung- und Auswerteeinheit die Ansteuerung der Anzeigezonen vornimmt. Z.B. kann ein Wert für die Winkelstellung vom Aufbau relativ zur Basis definiert sein, wobei ein Überschreiten des Wertes (bei einer Drehung des Aufbaus) zur Abschaltung einzelner Anzeigezonen bzw. zum Nicht-Darstellen von Benutzerinformation auf einem Display führt. Diese Abschaltung - oder ein Abdimmen - des Displays wird dabei vermittels der Steuerung- und Auswerteeinheit durchgeführt. Generell wird somit ein Vergleich durchgeführt, ob das vorgegebene Kriterium erfüllt wird, und basierend darauf eine Steuerung der Anzeigezonen vorgenommen. Eine aktuelle Winkelstellung kann dabei fortlaufend mit dem definierten Winkelkriterium verglichen werden.

Insbesondere kann erfindungsgemäss zumindest eine der Anzeigezonen beim Erfüllen des Winkelstellungskriteriums ein- oder ausgeschaltet werden. So können beispielsweise diejenigen Anzeigezonen die das Kriterium hinsichtlich ihrer radialen Ausrichtung (bezüglich der Stehachse) erfüllen aktiviert oder deaktiviert werden. Z.B können diejenigen Displays ausgeschaltet werden bzw. deaktiviert sein, deren Anzeigerichtungen innerhalb eines durch das Winkelstellungskriterium vorgegebenen Winkelbereichs liegen. Der Winkelbereich kann dabei allein bezüglich der Stehachse definiert sein (z.B. senkrecht dazu), wobei durch dessen Definition ein "Tortensegment" eines Zylinders aufgespannt wird und jene Anzeigerichtungen, die dieses Segment zumindest schneiden, durch die Steuerungs- und Auswerteeinheit verändert angesteuert werden können.

Ferner können erfindungsgemäss bei einem Starten eines Initialisierungsverfahrens durch eine beim Starten vorliegende Winkelstellung des Aufbaus relativ zur Basis ein Benutzerwinkelbereich und/oder ein Anzielwinkelbereich definiert werden, wobei nur diejenigen Anzeigezonen die Benutzerführungsinformation anzeigen, deren radiale Ausrichtungen innerhalb des Benutzerwinkelbereichs liegen, und/oder zumindest eine der Anzeigezonen gesteuert durch die Steuerung- und Auswerteeinheit in Abhängigkeit von einem Vergleich einer aktuellen Winkelstellung des Aufbaus mit dem Anzielwinkelbereich ein- oder ausgeschaltet wird.

Durch solche Benutzerwinkelbereiche und Anzielwinkelbereiche können jeweils Sektoren in einer Messumgebung definiert werden, in welchen eine grafische Bereitstellung von Information gewünscht ist oder in welchen eine derartige Anzeige nicht erfolgen soll. Beispielsweise sind leuchtende Displays in Richtung eines Feindes unerwünscht, damit eine Erkennbarkeit des Gerätestandorts von Seiten des Feindes möglichst gering gehalten werden kann. In einem damit korrespondierenden Anzielwinkelbereich können entsprechend automatisch gesteuert vermittels der Steuerungs- und Auswerteeinheit sämtliche Anzeigezonen ausgeschaltet sein bzw. bei Erreichen oder Eintreten in den Bereich (bei einem Schwenken des Aufbaus relativ zur Basis) automatisch ausgeschaltet werden.

Insbesondere kann der Benutzerwinkelbereich einer Richtung bzw. einem Aufenthaltsbereich zuordnet werden, in dem sich ein Benutzer des Goniometers zur Bedienung des Geräts vorzugsweise aufhält. Das Winkelstellungskriterium kann in diesem Zusammenhang beispielsweise eine Aktivierung und Informationsausgabe auf denjenigen Anzeigezonen vorgeben, deren radiale Ausrichtungen innerhalb des Benutzerwinkelbereichs liegen. Dabei kann wiederum eine jeweilige einzelne Ansteuerung der Zonen erfolgen.

Die Steuerung der Anzeigezonen kann insbesondere auf einem fortlaufenden, insbesondere kontinuierlichen, Vergleich der aktuell vorliegenden Winkelstellung des Aufbaus relativ zur Basis mit dem Winkelstellungskriterium erfolgen. Z.B. kann der aktuelle Stellwert und somit die jeweiligen aktuellen radialen Ausrichtungen der mindestens zwei Anzeigezonen mit einem im Rahmen des Winkelstellungskriteriums definierten Anziel- oder Benutzerwinkelbereichs verglichen werden und aus dem Vergleich ein Steuerungsbefehl hinsichtlich der Informationsbereitstellung generiert werden.

Ausserdem kann erfindungsgemäss mindestens eine der Anzeigezonen bei einem durch eine Änderung der Winkelstellung des Aufbaus erfolgenden Überschreiten eines jeweiligen der radialen Ausrichtung der mindestens einen Anzeigezone zugeordneten Winkelschwellwerts gesteuert durch die Steuerung- und Auswerteeinheit ausgeschaltet werden. Durch die Festlegung solcher Winkelschwellwerte, insbesondere jeweils eines Schwellwerts für jede Anzeigezone, kann mittels des Winkelencoders fortlaufend ein Winkelwert ermittelt und dieser mit den jeweiligen Schwellwerten verglichen werden. Jene Anzeigezonen, deren zugeordneter Winkelschwellwert durch eine aktuelle Winkelstellung überschritten ist bzw. während einer Drehung des Aufbaus überschritten wird, können damit - wiederum gesteuert durch die Steuerungs- und Auswerteeinheit - ausgeschaltet sein bzw. bei Überschreitung des Schwellwerts ausgeschaltet werden. Mittels einer derartigen Steuerung der Anzeigen können auch eine direkte Sichtverbindung zwischen einem beleuchteten Display und einem anzuzielenden Objekt, z.B. einer feindlichen Stellung, vermieden werden und damit eine Preisgabe des Gerätestandorts (z.B. dem Feind) durch Erkennen des Displays verhindert werden.

Weiters kann der Aufbau des Goniometers erfindungsgemäss eine zumindest teilweise eckige Grundfläche aufweisen und die mindestens zwei Anzeigezonen können jeweils an einer jeweils zwei Ecken verbindenden Fläche des Aufbaus angeordnet sein. Erfindungsgemäss kann der Aufbau alternativ oder zusätzlich eine zumindest teilweise elliptische, insbesondere runde, Grundfläche aufweisen und die mindestens zwei Anzeigezonen können an einer mit der elliptischen Grundfläche korrespondierenden Aussenmantelfläche des Aufbaus angeordnet sein.

Das Gehäuse des Aufbaus des Goniometers kann somit in einer teilweise elliptischen und/oder eckigen Ausführung vorliegen, wobei die Grundfläche des Ausbaus und damit korrespondierend die Aussenmandelflächen des Aufbaus elliptische und eckige Teilsegmente gleichzeitig aufweisen können. Die Anzeigezonen des Informationswiedergabemittels können damit je nach Ausführung des Aufbaus an unterschiedlichen Seitenflächen des Gehäuses angeordnet sein.

In dieser speziellen Ausführungsform kann das Informationswiedergabemittel erfindungsgemäss in einer den Aufbau entlang der Aussenmantelfläche des Aufbaus umgebenden Dimensionierung ausgebildet sein, insbesondere ringförmig. Dabei kann der Aufbau des Goniometers z.B. mit den Informationswiedergabemittel so umgeben sein, dass

Informationen in eine Vielzahl radialer Richtungen anzeigbar sind. Hierbei können das Informationswiedergabemittel bzw. eine entsprechende Vielzahl von Anzeigezonen des Informationswiedergabemittels so angesteuert werden, dass die angezeigte Information relativ zur Basis des Goniometers fortlaufend in einer im Wesentlichen festen, absoluten Richtung ausgegeben wird. Bei einer Drehung des Aufbaus und somit des Informationswiedergabemittels kann die Informationsanzeige somit auf der Anzeige "entlang wandern" und dadurch den Eindruck einer relativ zur Basis feststehenden Anzeige vermitteln, obwohl das Display mit dem Aufbau mitgedreht wird.

Hinsichtlich eines weiteren Aspekts der Erfindung kann das Goniometer erfindungsgemäss zusätzlich eine dritte Anzeigezone aufweisen, wobei durch die Anordnung der ersten Anzeigezone in der ersten radialen Ausrichtung am Aufbau eine Benutzerseite definiert wird und die zweite und dritte Anzeigezone jeweils um mindestens 90° versetzt zur ersten Anzeigezone am Aufbau angeordnet sind, insbesondere um 120° versetzt.

In dieser Ausführungsform des erfindungsgemässen Goniometers sind demnach drei Anzeigen so angeordnet, dass die Benutzerseite so definierbar ist, dass dieser Seite Hauptbedienelemente des Geräts zugeordnet sein können und diese Seite in Richtung eines Benutzers, insbesondere bei Aufstellung des Geräts, zeigt. Bei einer Rotation des Aufbaus relativ zur Basis können die Anzeigezonen weiters so am Aufbau platziert sein, dass fortlaufend zumindest eine Anzeigezone vom Benutzer wahrnehmbar ist. In dieser Ausführungsform kann wiederum ein Umschalten der Informationsausgabe erfolgen, sodass nicht alle drei Anzeigen Information bereitstellen, sondern je nach Winkelstellung des Aufbaus nur eine oder zwei der drei Anzeigezonen aktiviert sind, vorzugsweise diejenigen, welche im Sichtbereich des Benutzers liegen.

Insbesondere können die Anzahl und die jeweiligen radialen Ausrichtungen der Anzeigezonen am Aufbau des Goniometers gemäss einer Anzahl erforderlicher Messungen (z.B. zur Initialisierung) bzw. dafür vorgesehener Messstellungen gewählt werden. Sind so beispielsweise drei unterschiedliche Messstellungen des Aufbaus für eine Initialisierung des Goniometers vorgesehen, wobei zwischen zwei Messstellungen jeweils ein Winkel von 120° vorgegeben ist, können drei Anzeigezonen so am Aufbau angeordnet sein, dass die radialen Ausrichtungen von jeweils zwei (benachbarten) Zonen jeweils einen 120° Winkel einschliessen. Entsprechend können bei vier einzustellenden Winkelstelllungen (im Rahmen eines Initialisierungsvorgangs) vier Anzeigezonen am Aufbau vorgesehen sein, wobei die radialen Ausrichtungen jeweils zweier benachbarter Zonen einen 90° Winkel einschliessen.

Der Aufbau des Goniometers kann erfindungsgemäss ein eine Elevationsneigungsachse definierendes Drehgelenk aufweisen, wobei die Neigungsachse senkrecht zur Stehachse steht, insbesondere wobei dem Drehgelenk ein weiterer Winkelencoder zur Bestimmung eines Neigungswinkels zugeordnet ist.

Mit diesem Drehgelenk steht dem Goniometer eine zweite Achse zur Verfügung um welche ein elevatives Schwenken erfolgen kann. Kann mittels der Stehachse ein azimutaler Winkel eingestellt und bestimmt werden, so sind durch die Neigungsachse Elevationswinkel einstellbar und mittels eines Winkelencoders am Drehgelenk oder eines im Beobachtungsgerät integrierten Neigungssensors insbesondere messbar. Damit kann eine Ausrichtung eines am Goniometer angeordneten und um die beiden Achsen drehbaren Geräts in zwei Achsen präzise bestimmt werden. Insbesondere bei einer Befestigung eines Beobachtungsgeräts am Aufbau ist diese Ausführungsform vorteilhaft.

Wie dem Fachmann bekannt und für Goniometer typisch kann der Aufbau zudem eine Aufnahme zur Befestigung eines Beobachtungsgeräts aufweisen. Dabei wird die Aufnahme des Beobachtungsgeräts durch eine feste Positions- und/oder Winkelrelation des Beobachtungsgeräts zum Aufbau realisiert. Das Beobachtungsgerät wird dementsprechend bei einem Schwenken des Aufbaus ebenfalls verschwenkt, wobei so gleichzeitig ein Azimutwinkel für das Beobachtungsgerät bestimmbar ist. Zudem kann - bei einer Ausführungsform des Goniometers mit einem zusätzlichen Drehgelenk und zusätzlichem Winkelkodierer - ein Elevationswinkel bestimmt werden und damit die Ausrichtung des Beobachtungsgeräts in zwei Richtungen bestimmt werden.

Anstelle des Beobachtungsgeräts können ferner andere Vorrichtungen am Aufbau, insbesondere vermittels der Aufnahme, befestigt werden. Für diese weiteren Vorrichtungen, z.B. kleiner Waffensysteme, können dann analog jeweilige azimutale und elevative Winkel und insbesondere eine Anzielausrichtung bestimmt werden.

Die Erfindung betrifft zudem ein System aus einem Goniometer und einem Beobachtungsgerät, wobei das Goniometer gemäss einer der oben beschriebenen Ausführungen ausgebildet ist. Die zweite Systemkomponente bildet das auf den Aufbau in einem definierten Positions- und Winkelbezug aufgesetztes Beobachtungsgerät zur Anvisierung eines Ziels. Das Beobachtungsgerät ist weiters um die Stehachse die sowie insbesondere eine Neigungsachse schwenkbar und weist eine Entfernungsmessfunktionalität auf, insbesondere wobei das Beobachtungsgerät modulartig am Aufbau befestigbar ist.

Ferner weist das System ein grafisches elektronisches Informationswiedergabemittel mit mindestens zwei Anzeigezonen zur Anzeige einer Benutzerführungsinformation und/oder einer Messinformation auf, wobei eine erste der mindestens zwei Anzeigezonen des Informationswiedergabemittels in einer ersten radialen Ausrichtung relativ zur Stehachse am Aufbau oder am Beobachtungsgerät angeordnet ist. Eine zweite der mindestens zwei Anzeigezonen des Informationswiedergabemittels ist in einer zur ersten radialen Ausrichtung unterschiedlichen zweiten radialen Ausrichtung relativ zur Stehachse am Aufbau oder am Beobachtungsgerät angeordnet, wobei die erste radiale Ausrichtung und die zweite radiale Ausrichtung einen Winkel von mindestens 90° einschliessen. Zudem werden die mindestens zwei Anzeigezonen durch eine Steuerungs- und Verarbeitungseinheit in Abhängigkeit von einem Erfüllen eines gespeicherten Winkelstellungskriteriums durch eine aktuelle Winkelstellung automatisch einzeln angesteuert.

Insbesondere kann das Goniometer des Systems im Rahmen der Erfindung gemäss einer oben beschriebenen Ausführungen weitergebildet sein.

Das Beobachtungsgerät kann ausserdem neben einem Entfernungsmesser beispielsweise mit einem elektronischen Display zur Einspielung von Zusatzinformation, wie z.B. Entfernung zu einem Ziel, Azimut- und Elevationswinkel oder Wetterdaten, im Sichtkanal ausgerüstet sein. Zudem kann zumindest ein Neigungssensor an diesem Gerät vorgesehen sein, damit ein Elevationswinkel - unabhängig von einem dem Drehgelenk zugeordneten Winkelencoder - bestimmbar ist. Diese Geräte können im Wesentlichen Anwendung im militärischen Bereich oder im Jagdbereich finden. Z.B. ist aus der EP 2 138 885 A1 ein gattungsgemässes Beobachtungsgerät bekannt.

Ein weiterer Aspekt der Erfindung betrifft ein Initialisierungsverfahren zum Ausrichtungsbestimmen eines Goniometers. Dabei weist das Goniometer eine eine Stehachse definierende Basis und einen um die Stehachse relativ zur Basis rotierbaren Aufbau auf. Ausserdem erfolgt ein Aufstellen und grobes Horizontieren des Goniometers, ein Bestimmen einer Winkelstellung des Aufbaus relativ zur Basis und eine graphische Anzeige von Benutzerführungsinformation. Bei einem Starten des Initialisierungsverfahrens oder durch ein definiertes Ausrichten der Basis wird ein Benutzerwinkelbereich definiert. Zudem erfolgt das Ausrichtungsbestimmen durch ein zumindest zweimaliges Ausrichtungsmessen in zumindest zwei unterschiedlichen Initialisierungswinkelstellungen des Aufbaus relativ zur Basis. Zum Erreichen der jeweiligen Initialisierungswinkelstellungen erfolgt das graphische Anzeigen der Benutzerführungsinformation in mindestens zwei radialen Ausrichtungen derart automatisch gesteuert, dass die Benutzerführungsinformation nur in denjenigen radialen Ausrichtungen angezeigt wird, deren Richtungen innerhalb des Benutzerwinkelbereichs liegen. Dabei schliessen die mindestens zwei radialen Ausrichtungen einen Winkel von mindestens 90° ein.

Insbesondere kann erfindungsgemäss mittels des zumindest zweimaligen Ausrichtungsmessens eine Nordrichtung abgeleitet werden. Ausserdem kann im Rahmen des Initialisierungsverfahrens das Ausrichtungsmessen in drei Initialisierungswinkelstellungen erfolgen und ein Gütewert für die abgeleitete Nordrichtung und insbesondere zusätzlich der Nullpunktsfehlers eines in einem dafür vorgesehenen Sensor verwendeten Kreisels bestimmt werden.

Nach einem Aufstellen eines Goniometers an einem Standort kann für die Bereitstellung einer präzisen relativen Azimutwinkelbestimmung eine Initialisierung des Geräts durchgeführt werden. Hierfür werden gemäss der Erfindung zumindest zwei Messung mit jeweils unterschiedlicher Ausrichtung des Goniometers unternommen und aus einer gemeinsamen Betrachtung der beiden Messergebnisse eine Ausrichtung bestimmt, wobei insbesondere eine Nordrichtung ermittelt und eine relative Winkelstellung der Basis bzw. des Aufbaus des Goniometers dazu abgeleitet wird. Für jede anschliessend erfolgende Ausrichtungsmessung mit dem initialisierten Goniometer kann somit eine Richtung zu einem Ziel bestimmt werden. Ist zudem der Standort des Goniometers bekannt, z.B. aus einer GPS Positionsbestimmung, kann mittels einer zusätzlichen Entfernungsmessung eine exakte absolute Position des Ziels bestimmt werden.

Die erfindungsgemässe Vorrichtung, das erfindungsgemässe System und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig.1: ein Goniometer mit einem Beobachtungsgerät und Stativ nach dem Stand der Technik;
- Fig.2a: ein erfindungsgemässes Goniometer mit einem Stativ;
- Fig.2b-c: jeweils eine vergrösserte Darstellung der dem erfindungsgemässen Goniometer gemäss Figur 2a zugeordneten Anzeigezonen;
- Fig.3a-b: jeweils eine Ausführungsform einer Anzeigezone für ein erfindungsgemässes Goniometer;
- Fig.4: eine weitere Ausführungsform eines erfindungsgemässen Goniometers mit einem Beobachtungsgerät; und
- Fig.5: ein Anzielen eines Objekts mit einem erfindungsgemässen System aus Goniometer und Beobachtungsgerät.

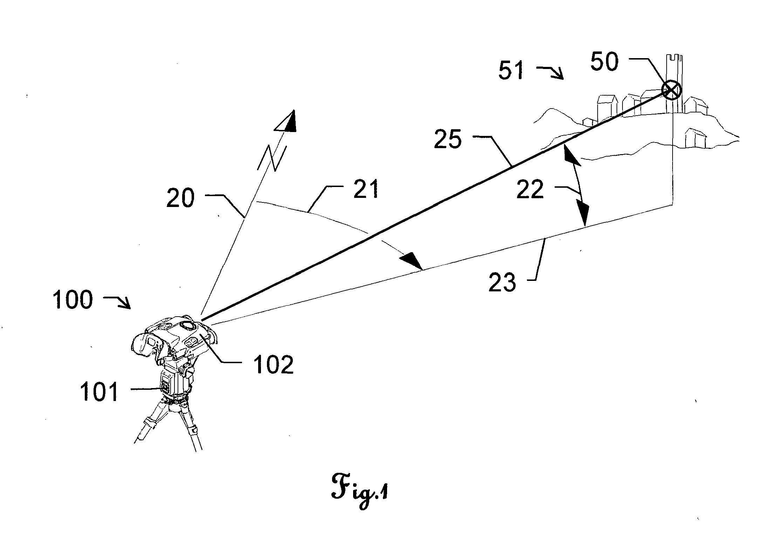

Figur 1 zeigt ein kombiniertes Messgerät 100 nach dem Stand der Technik mit einem Goniometer 101 und einem Beobachtungsgerät 102. Derartige Messgeräte 100 werden insbesondere im militärischen Bereich als Beobachtungs- oder Anzielinstrumente oder unterstützend in der Jagd eingesetzt. Je nach Anwendungsgebiet und Anforderung an die jeweilige Messsituation kann das Beobachtungsgerät 102 in einer angepassten Ausführungsform, z.B. ausgerüstet mit einem Nachtsichtmodul, vorliegen. In diesem Zusammenhang schlägt die EP 1 744 196 A1 unterschiedliche Ausführungsformen für ein gattungsgemässes Beobachtungsgerät vor.

Im vorliegenden Ausführungsbeispiel ist eine bestimmte Nordrichtung durch den Pfeil 20 dargestellt, wobei das Bestimmen dieser Richtung z.B. mittels eines Magnetometers oder mit Hilfe von Drehratensensoren durchgeführt wurde. Mit dem Beobachtungsgerät 102 wird weiters eine Zielszenerie 51 beobachtet und in dieser Szenerie 51 ein Zielpunkt 50 angezielt. Das Anzielen des Zielpunkts 50 und ein Entfernungsmessen zu diesem Punkt 50 erfolgt hier mittels eines vom Beobachtungsgerät 102 emittierten Laserstrahls 25 in Zielpunktrichtung. Das Goniometer verfügt ferner über einen Winkelmesssensor, mit welchem in azimutaler Richtung eine Winkelstellung des Aufbaus relativ zur feststehenden Basis des Goniometers messbar ist und somit ein Azimutwinkel 21 zwischen der Nordrichtung und der Anzielrichtung bestimmbar ist. Zudem weist das Messgerät 100 ein Winkelbestimmungsmittel zur Bestimmung des Elevationswinkels 22 auf, z.B. einen dem Beobachtungsgerät 102 zugeordneten Neigungssensor oder einen zweiten Winkelmesssensor zum Messen eines Nickwinkels zwischen dem Goniometer 101 und dem Beobachtungsgerät 102. Der Elevationswinkels 22 repräsentiert somit den Winkel 22 zwischen der Anzielrichtung und einer Horizontalen 23 mit einem absoluten elevativen Winkel von 0°.

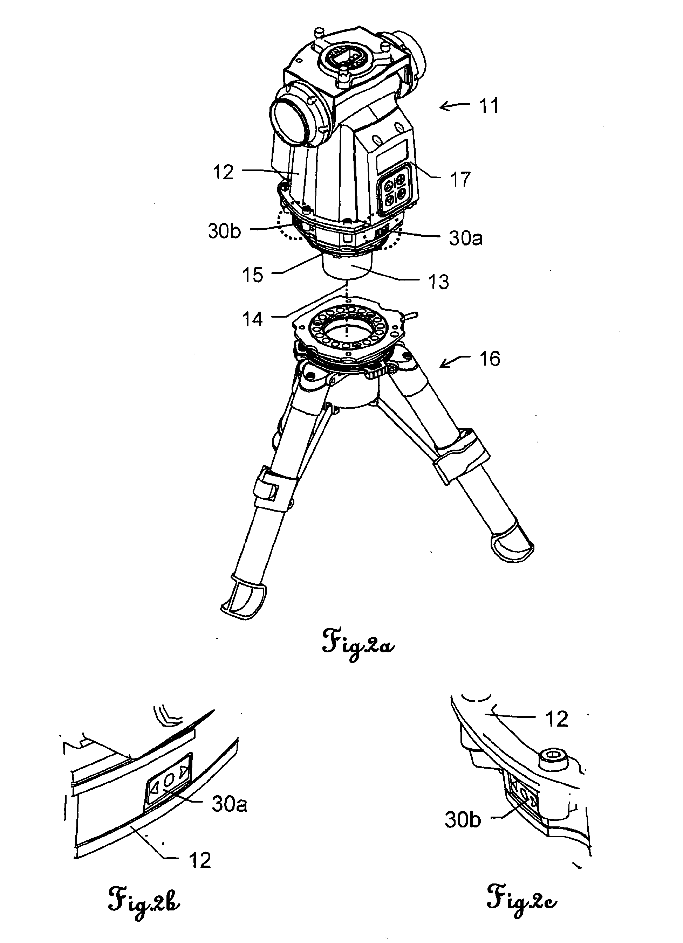

Figur 2a zeigt eine Ausführungsform eines erfindungsgemässen Goniometers 11 mit einem zur Aufnahme einer Basis 13 des Goniometers 11 geeigneten Stativ 16. Die Basis 13 ist mit einem Aufbau 12 drehbar um eine Stehachse 14 verbunden, wobei ausserdem ein Winkelencoder 15 - zwischen Basis 13 und Aufbau 12 - zur präzisen Bestimmung einer Winkelstellung des Aufbaus 12 relativ zur Basis 13 vorgesehen ist. Ferner verfügt das Goniometer 11 in der vorliegenden Ausführung über ein Gyroskop (nicht dargestellt) zur Nordfindung. Erfindungsgemäss weist der Aufbau 12 zudem zwei Anzeigezonen 30a,30b auf (zur Verdeutlichung jeweils mittels eines gestrichelten Kreises markiert), wobei die Anzeigezonen 30a,30b eine Information bezüglich einer einzustellenden Winkelstellung bereitstellen können. Die beiden Anzeigezonen 30a,30b sind mit einer relativen radialen Ausrichtung von mindestens 90° Unterschied zueinander angeordnet, d.h. die radialen Ausrichtungen die beiden Anzeigezonen 30a,30b schliessen einen Winkel von mindestens 90° ein.

Im Rahmen eines Initialisierungsvorgangs für das Goniometer 11 kann das Gyroskop für die Nordfindung und somit für eine Referenzierung des Geräts 11 herangezogen werden. Zur Initialisierung können hierbei zumindest zwei, insbesondere drei, Messungen mit dem Gyroskop in jeweils unterschiedlichen Winkelstellungen von Aufbau 12 relativ zur Basis 13 vorteilhaft sein. Ein derartiger Initialisierungsvorgang und dafür herangezogene Messmittel seitens des Goniometers 11 sind beispielsweise in der europäischen Patentanmeldung NR. EP 11184180.5 beschrieben. Insbesondere kann in einem üblichen Anwendungsfall das Gerät 11 mit Hilfe des Stativs 16 an einem Aufstellpunkt aufgestellt und in eine Beobachtungsrichtung ausgerichtet werden. Bei einer derartigen Ausrichtung ist ein Benutzerinterface 17 in entgegengesetzter Richtung zur Beobachtungsrichtung ausgerichtet und kann so für einen Benutzer gut erkennbar sein.

Mit Starten des Initialisierungsvorgangs kann in Folge eine erste gyroskopische Messung in dieser ersten Ausrichtung durchgeführt werden. Nach erfolgter erster Messung kann das Goniometer 11 dann in eine zweite Ausrichtung gedreht werden, um eine zweite Messung in einer zweiten Gyroskopausrichtung durchzuführen. Je nach Ausführungsform des Goniometers 11 oder einer jeweiligen Nord-Bestimmungsmethode können eine weitere dritte Messung in einer dritten Ausrichtung oder noch weitere zusätzliche Messungen erfolgen. Zum Erreichen der jeweiligen zweiten, dritten oder weiteren Winkelstellung stellen die erfindungsgemässen Anzeigezonen 30a,30b die Information bereit in welche Richtung eine Drehung erfolgen soll und wann die durch das Gerät 11 vorgegebene zweite oder weitere Winkelstellung erreicht ist. Durch das Drehen des Ausbaus 12 in unterschiedliche Winkelstellungen werden zugleich die Anzeigezonen 30a,30b mit verschwenkt, womit die Information, welche mittels der ersten, dem Benutzer nach dem Aufstellen des Geräts 11 zugewandten Anzeigezone 30a angezeigt wird, aus dem Sichtfeld des Benutzers geschwenkt bzw. durch das Schwenken verdeckt werden kann. Neben einer Darstellung einer zum Erreichen einer bestimmten Winkelstellung vorgesehenen Information kann mittels der Anzeigezonen 30a,30b ausserdem eine Messinformation, z.B. eine verbleibende Messzeit, angezeigt werden.

Bei diesem Schwenken erfolgt erfindungsgemäss eine Ansteuerung des Informationswiedergabemittels bzw. der Anzeigezonen 30a,30b in Abhängigkeit der Winkelstellung des Aufbaus 12 relativ zur Basis 13. So kann die Ansteuerung beispielsweise derart erfolgen, dass immer nur jene Anzeigezonen 30a,30b eine Information bereitstellen, d.h. aktiviert sind, welche sich im Sichtfeld des Benutzers befinden. Das durch eine Ausrichtung des Aufbaus 12 abgedeckte Sichtfeld des Benutzers kann dabei durch die beim Starten des Initialisierungsprozesses vorliegende Ausrichtung der Basis 13 definiert werden. Ausserdem können im Rahmen der winkelabhängigen Steuerung der Anzeigezonen 30a,30b diejenigen ausgeschaltet sein bzw. werden, deren radiale Ausrichtung in einem definierten Beobachtungsbereich liegt. Der Beobachtungsbereich kann dabei ebenfalls mit Aufstellung des Geräts 11 bzw. mit dem Starten des Initialisierungsvorgangs durch die Orientierung der Basis 13 festgelegt werden.

In einer weiteren Ausführungsform des Goniometers 11 können drei Anzeigezonen am Aufbau 12 des Goniometers 11 angeordnet sein, wobei diese jeweils mindestens um 90° bezüglich ihrer radialen Ausrichtung zueinander versetzt angeordnet sind, insbesondere wobei zwischen der Ausrichtung von jeweils zwei Anzeigezonen im Wesentlichen ein 120° Winkel vorliegt.

Die Figuren 2b und 2c zeigen jeweils eine der in Figur 2a durch die gestrichelten Kreise indizierten und am Aufbau 12 des erfindungsgemässen Goniometers 11 angeordneten Anzeigezonen 30a,30b in vergrösserter Darstellung.

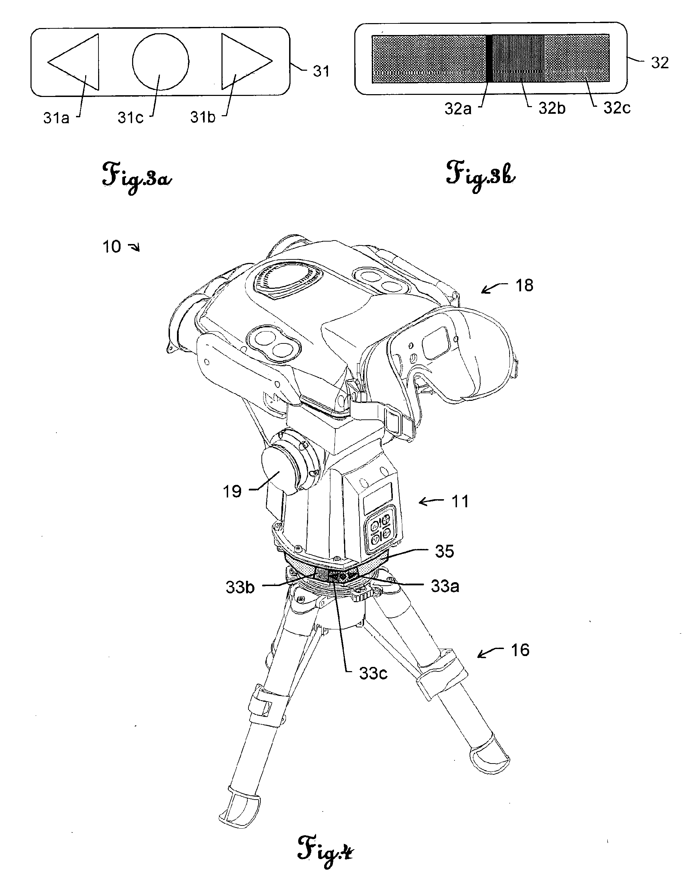

Die Figuren 3a und 3b zeigen jeweils eine Ausführungsform der dem erfindungsgemässen Goniometer zugeordneten Anzeigezonen 31,32. In Figur 3a wird eine einem erfindungsgemässen Goniometer zuordenbare Anzeigezone 31 gezeigt, wobei diese zwei richtungsangebende, beleuchtbare Pfeilsymbole 31a,31b und ein beleuchtbares Rundsymbol 31c aufweist. Insbesondere bei der Führung eines Benutzers durch den Initialisierungsprozess des Goniometers kann mittels Beleuchtens einer der Pfeilsymbole 31a,31b dem Benutzer eine Richtung angezeigt werden, in welche das Goniometer zum Erreichen der nächsten Messwinkelstellung gedreht werden muss. Wird dann bei einer entsprechenden Drehung des Geräts die vom System vorgegebene Ausrichtung erreicht, so wird anstelle des jeweiligen richtungsweisenden Pfeils 31a,31b das Rundsymbol 31c beleuchtet und so das Erreichen der geeigneten Winkelstellung signalisiert.

Figur 3b zeigt eine alternative Ausführungsform der Anzeigezone 32. In diesem Zusammenhang wird auf der Anzeige ein Balken 32b angezeigt, welcher durch seine Ausrichtung relativ zu einer Mitte 32a eines Anzeigebereichs 32c eine Drehrichtung anzeigt. Durch das Ausmass des Balkens 32b wird die noch verbleibende Winkelveränderung bis zum Erreichen der vorgegebenen Messwinkelstellung angezeigt. Das Balkenausmass wird dabei je nach Winkelstellung fortlaufend angepasst. Ist eine vorgegebene Winkelposition erreicht, so kann beispielsweise zur Signalisierung der gesamte Anzeigebereichs 32c oder nur die Mitte 32a des Bereichs 32c beleuchtet werden.

Figur 4 zeigt eine Ausführungsform eines erfindungsgemässen Goniometers 11 mit einem Beobachtungsgerät 18 (System aus Goniometer und Beobachtungsgerät) und Stativ 16. Die Basis des Goniometers 11 ist mit dem Stativ 16 derart ausrichtungsfest verbunden, dass die Orientierung der Basis relativ zum Stativ 16 erhalten bleibt. Der Aufbau des Goniometers 11 ist wiederum um eine Stehachse relativ zur Basis drehbar, wobei mittels eines Winkelencoders die jeweilige Winkelstellung von Aufbau zu Basis bestimmbar ist. Durch eine Drehung des Goniometers 11 wird das Beobachtungsgerät 18 entsprechend der Drehung mit geschwenkt. Somit kann die Ausrichtung des Beobachtungsgeräts 18 ebenfalls mittels des Winkelencoders bestimmt werden. Zudem ist das Beobachtungsgerät 18 über ein Drehgelenk 19 des Goniometers 11 um eine Neigungsachse senkrecht zur Stehachse neigbar. Zur Bestimmung eines anliegenden Neigungswinkels kann beispielsweise das Beobachtungsgerät 18 zumindest einen Neigungssensor aufweisen oder dem Drehgelenk 19 kann ein weiterer Winkelencoder zur Messung eines Drehgelenkwinkels zugeordnet sein. Aus der Bestimmung des Neigungswinkels kann - nach einer vorangehenden Referenzierung des Beobachtungsgeräts 18 relativ zu einer Horizontalen - ein aktueller Elevationswinkel für eine Ausrichtung des Beobachtungsgeräts 18 ermittelt werden. Ferner verfügt das Beobachtungsgerät 18 über einen Entfernungsmesser (nicht gezeigt) zur Messung von Distanzen zu Zielen.

Mit dem gezeigten System 10 aus erfindungsgemässem Goniometer 11 und Beobachtungsgerät 18 mit Stativ 16 können somit eine exakte Ausrichtung des Beobachtungsgeräts 18, eine durch das Beobachtungsgerät 18 definierte Anzielrichtung und eine Entfernung zu einem Zielpunkt exakt bestimmt werden. Diese Bestimmung kann eine relative Position eines Ziels zu einem Standort des Systems 10 bereitstellen. Ist ausserdem der Aufstellpunkt der Gerätekombination 10, insbesondere koordinativ, bekannt, so kann für den Zielpunkt eine absolute Position berechnet werden. Die Auswertung der ermittelten Messdaten kann beispielsweise auf einer Steuerung- und Auswerteeinheit am Goniometer 11, am Beobachtungsgerät 18 oder mittels einer externen Einheit erfolgen, wobei eine Datenübertragung zwischen den einzelnen Systemkomponenten - auch mit der externen Einheit - bereitgestellt ist.

Erfindungsgemäss weist das Goniometer 11 ein Informationswiedergabemittel auf. In dem vorliegenden System ist dieses Informationswiedergabemittel als ein Display 35 so ausgebildet, dass das Display 35 eine Form entsprechend des Gehäuses des Aufbaus des Goniometers 11 aufweist. Das Display 35 umgibt somit den gesamten Aufbau bzw. ist an der Aussenmantelfläche des Aufbaus so angeordnet, dass eine Information mittels des Displays 35 in alle radialen Richtungen relativ zur Stehachse darstellbar ist. Die Information wird hier in einer Anzeigezone 33a angezeigt, wobei die Anzeige der Information in Abhängigkeit der Winkelstellung des Aufbaus relativ zur Basis steuerbar ist.

Somit kann die Information bei einer Drehung des Aufbaus fortlaufend entlang des Displays 35 versetzt dargestellt werden, d.h. bei einer Drehung um einen bestimmten Winkel kann die Anzeige der Information in einer der aktuellen Anzeigezone 33a folgenden Anzeigezone 33b bereitgestellt werden, wobei sich diese hinsichtlich der jeweiligen Ausdehnung auf dem Display 35 in einem Überschneidungsbereich 33c überschneiden können. Insbesondere sind die Anzeigezonen 33a,33b jeweils in ihrer Grösse im Wesentlichen vergleichbar, wobei sich deren jeweilige radiale Ausrichtung relativ zur Stehachse des Goniometers 11 unterscheidet. So kann beispielsweise eine Anzeigezone um 1° versetzt (bezüglich der jeweiligen radialen Anordnung der Zonen) zur nächsten Zone liegen, wobei die jeweiligen Anzeigebereiche sich dann zu einem relativ grossen Anteil überschneiden.

Mit einer derartigen Anzeige kann die bereitgestellte Information so angezeigt werden, dass die Anzeigerichtung relativ zur feststehenden Basis fortlaufend im Wesentlichen innerhalb eines begrenzten Benutzersichtbereichs, insbesondere im Wesentlichen kontinuierlich in eine feststehende Benutzerrichtung, liegt. Durch ein so erreichbares "Wandern" der Information auf dem Display 35 kann für den Benutzer der Eindruck erzeugt werden, dass die Information unabhängig von der Winkelstellung des Aufbaus immer in eine feststehende Richtung - im Rahmen der jeweiligen Displayauflösung - ausgegeben wird.

Insbesondere liegt ein Vorteil des erfindungsgemässen Goniometers darin, dass der Benutzer im Rahmen eines für die Bestimmung der Nordrichtung notwendigen Initialisierungsprozesses die dafür notwendigen Informationen trotz einer Drehung des Goniometers 11 immer innerhalb seines Sichtfelds ausgegeben bekommen kann und somit sich nicht entsprechend des Drehwinkels neu zum Gerät bzw. zum Benutzerinterface des Geräts positionieren muss.

Zur Nordfindung und somit zur Initialisierung bzw. Referenzierung des Geräts können mindestens zwei, insbesondere drei, Messungen mit einem im Goniometer 11 angeordneten Gyroskop durchgeführt werden müssen. Hierfür muss das Goniometer 11 pro Messung in eine jeweils andere geeignete und vom Gerät vorgegebene Ausrichtung gebracht werden. Dieses Ausrichten wird zumeist manuell durch einen Benutzer durchgeführt. Zur Führung des Benutzers durch den Initialisierungsvorgang werden diesem Informationen mittels des Displays 35 angezeigt. Der Benutzer sieht dadurch unabhängig von der Winkelstellung des Goniometers 11 die Initialisierungsinformation und kann entsprechend einfach die Nordreferenzierung des Geräts vornehmen.

In einem speziellen Anwendungsfall kann ein Operator eines erfindungsgemässen Goniometers 11 beispielsweise das Stativ 16 an einer strategisch günstigen Standort aufstellen und Goniometer 11 und Beobachtungsgerät 18 darauf positionieren. Im Anschluss kann die Initialisierung des Systems 10 erfolgen, indem der Operator die erste Messung in der Aufstellposition durchführt und das Goniometer 11 anschliessend in eine zweite und dritte Messposition stellt. Dabei kann der Operator, z.B. während eines militärischen Einsatzes, seine Position hinter dem Goniometer 11, d.h. abgewendet von unbekanntem bzw. feindlichem Terrain, beibehalten bis das Goniometer 11 funktionsbereit ist. Danach kann eine Anzielung eines feindlichen Ziels, z.B. eines Panzers, durch das Beobachtungsgerät erfolgen und somit dessen Position exakt bestimmt werden. Eine dadurch erzeugte Information kann beispielsweise für einen Angriff auf das Ziel weiterverwendet werden.

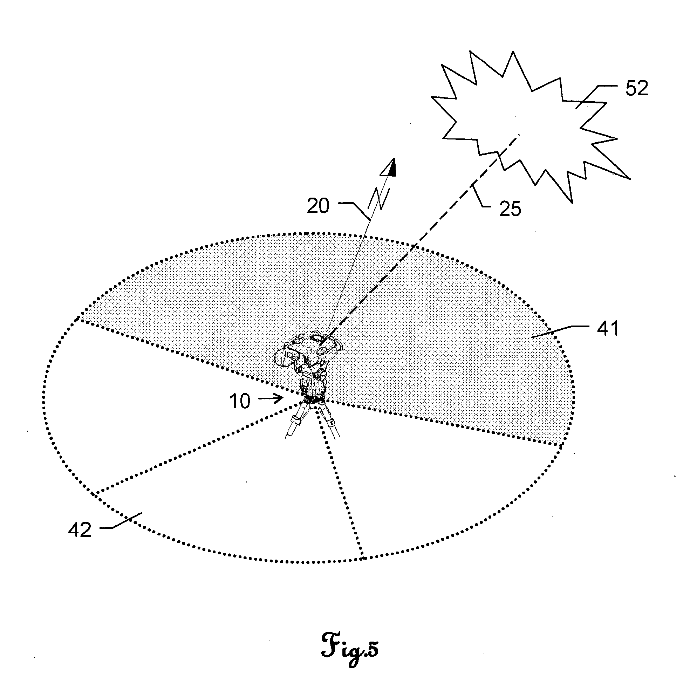

Figur 5 zeigt eine Ausführungsform für ein erfindungsgemässes System 10 aus Goniometer und Beobachtungsgerät mit Stativ. Mittels eines Gyroskops (nicht dargestellt) ist hierbei eine Nordrichtung 20 nach Aufstellung des Goniometers bestimmt worden, wobei das Goniometer mit Hilfe von drei Anzeigezonen (hier nicht gezeigt), welche jeweils um 90° versetzt am Aufbau angeordnet sind, in die dafür vorgegebenen jeweiligen Messpositionen schwenkbar ist. Zudem wird mittels eines Laserstrahls 25 ein Ziel 52 angezielt und eine Entfernung zum Ziel 52 bestimmt. Die Ausrichtung des Beobachtungsgeräts wird gemäss der zu Figur 4 beschriebenen Methode bestimmt. Damit ist durch die Kombination der bekannten Geräteausrichtung und der Entfernungsmessung eine exakte Positionsbestimmung des Ziels 52 durchführbar.

Relativ zur Basis bzw. zum Stativ des Systems 10 sind ein Anzielwinkelbereich 41 und ein Benutzerwinkelbereich 42 definiert. Die Bereiche 41,42 können unabhängig von der Orientierung des Beobachtungsgeräts bzw. des Goniometers bezüglich Ausrichtung und Winkelöffnungsbereich fest bleiben. In diesem Zusammenhang kann der Anzielwinkelbereich 41 einem Objekt, z.B. einem Feind, zugewandt sein, wobei diejenigen Anzeigezonen deren radiale Ausrichtung innerhalb des Anzielwinkelbereich 41 liegen gesteuert von einer Steuerungs- Auswerteeinheit deaktiviert sind bzw. wobei mittels dieser Zonen keine Information angezeigt wird. Insbesondere kann dabei das Informationswiedergabemittel am Goniometer so in Abhängigkeit der Winkelstellung gesteuert werden, dass Information nur auf denjenigen Anzeigezonen bereitgestellt wird, deren radiale Ausrichtung - im Rahmen eines Winkelvergleichs - innerhalb des Benutzerwinkelbereichs 42 liegt.

Durch eine solche Steuerung der Informationswiedergabemittel kann z.B. eine Wahrnehmung des Goniometers aufgrund des erleuchteten Displays durch einen Feind verhindert bzw. unterbunden werden. Eine direkte und ununterbrochenen Sichtverbindung zwischen einer aktiven Anzeigezone (d.h. Information anzeigender Anzeigezone) und einem sich im Anzielwinkelbereich 41 befindlichen Objekt kann durch das Abschalten einzelner Anzeigezonen innerhalb des Anzielwinkelbereich 41 verhindert werden.

Es versteht sich, dass diese dargestellten Figuren nur mögliche Ausführungsbeispiele schematisch darstellen. Die verschiedenen Ansätze können erfindungsgemäss ebenso miteinander sowie mit Vorrichtungen und Verfahren zum Vermessen und/oder Anzielen von Objekten des Stands der Technik kombiniert werden.

## Patentansprüche

1. Goniometer (11), ausgebildet zur modulartigen Aufnahme eines handhaltbaren Beobachtungsgeräts und zur Bestimmung dessen Azimutwinkels, mit zumindest
• einer eine Stehachse (14) definierenden Basis (13),
• einem Aufbau (12), wobei der Aufbau (12) um die Stehachse (14) relativ zur Basis (13) rotierbar ist,
• einem Winkelencoder (15) zur Bestimmung einer azimutalen Winkelstellung des Aufbaus (12) um die Stehachse (14) relativ zur Basis (13) und
• einer Steuerungs- und Verarbeitungseinheit,
**dadurch gekennzeichnet, dass**
der Aufbau (12) ein grafisches elektronisches Informationswiedergabemittel (35) mit mindestens zwei Anzeigezonen (30a,30b,31,32,33a,33b) zur Anzeige einer einem Erreichen einer geeigneten Winkelstellung dienenden Benutzerführungsinformation (31a-c,32a-c), und insbesondere einer Messinformation, aufweist, wobei
• eine erste der mindestens zwei
Anzeigezonen (30a,31,32,33a) des Informationswiedergabemittels (35) in einer ersten radialen Ausrichtung relativ zur Stehachse (14) am Aufbau (12) angeordnet ist,
• eine zweite der mindestens zwei
Anzeigezonen (30b,31,32,33b) des Informationswiedergabemittels (35) in einer zur ersten radialen Ausrichtung unterschiedlichen zweiten radialen Ausrichtung relativ zur Stehachse (14) am Aufbau (12) angeordnet ist, wobei die erste radiale Ausrichtung und die zweite radiale Ausrichtung einen Winkel von mindestens 90° einschliessen, und
• die mindestens zwei
Anzeigezonen (30a,30b,31,32,33a,33b) durch die Steuerungs- und Verarbeitungseinheit in Abhängigkeit von einem Erfüllen eines definierten Winkelstellungskriteriums durch die vorliegende azimutale Winkelstellung automatisch einzeln angesteuert werden.

2. Goniometer (11) nach Anspruch 1,
**dadurch gekennzeichnet, dass**
zumindest eine der Anzeigezonen (30a,30b,31,32,33a,33b) beim Erfüllen des Winkelstellungskriteriums ein- oder ausgeschaltet wird.

3. Goniometer (11) nach Anspruch 1 oder 2,
**dadurch gekennzeichnet, dass**
bei einem Starten eines Initialisierungsverfahrens durch eine beim Starten vorliegende Winkelstellung des Aufbaus (12) relativ zur Basis (13) ein Benutzerwinkelbereich (42) und/oder ein Anzielwinkelbereich (41) definiert wird, wobei
• nur diejenigen Anzeigezonen (30a,30b,31,32,33a,33b) die Benutzerführungsinformation (31a-c,32a-c) anzeigen, deren radiale Ausrichtungen innerhalb des Benutzerwinkelbereichs (42) liegen, und/oder
• zumindest eine der
Anzeigezonen (30a,30b,31,32,33a,33b) gesteuert durch die Steuerung- und Auswerteeinheit in Abhängigkeit von einem Vergleich der aktuellen Winkelstellung des Aufbaus (12) mit dem Anzielwinkelbereich (41) ein- oder ausgeschaltet wird.

4. Goniometer (11) nach einem der Ansprüche 1 bis 3,
**dadurch gekennzeichnet, dass**
mindestens eine der
Anzeigezonen (30a,30b,31,32,33a,33b) bei einem durch eine Änderung der Winkelstellung des Aufbaus (12) erfolgenden Überschreiten eines jeweiligen der radialen Ausrichtung der mindestens einen
Anzeigezone (30a,30b,31,32,33a,33b) zugeordneten Winkelschwellwerts gesteuert durch die Steuerung- und Auswerteeinheit ausgeschaltet wird.

5. Goniometer (11) nach einem der Ansprüche 1 bis 4,
**dadurch gekennzeichnet, dass**
der Aufbau (12) eine zumindest teilweise eckige Grundfläche aufweist und die mindestens zwei Anzeigezonen (30a,30b,31,32,33a,33b) jeweils an einer jeweils zwei Ecken verbindenden Fläche des Aufbaus angeordnet sind.

6. Goniometer (11) nach einem der Ansprüche 1 bis 5,
**dadurch gekennzeichnet, dass**
der Aufbau (12) eine zumindest teilweise elliptische Grundfläche aufweist und die mindestens zwei Anzeigezonen (30a,30b,31,32,33a,33b) an einer mit der elliptischen Grundfläche korrespondierenden Aussenmantelfläche des Aufbaus (12) angeordnet sind.

7. Goniometer (11) nach einem der Ansprüche 1 bis 6,
**dadurch gekennzeichnet, dass**
das Informationswiedergabemittel (35) in einer den Aufbau (12) entlang der Aussenmantelfläche des Aufbaus (12) umgebenden Dimensionierung ausgebildet ist, insbesondere ringförmig.

8. Goniometer (11) nach einem der Ansprüche 1 bis 7,
**dadurch gekennzeichnet, dass**
das Goniometer (11) zusätzlich eine dritte Anzeigezone (31,32) aufweist, wobei durch die Anordnung der ersten Anzeigezone (30a,31,32,33a) in der ersten radialen Ausrichtung am Aufbau (12) eine Benutzerseite definiert wird und die zweite und dritte Anzeigezone (30a,30b,31,32,33a,33b) jeweils um mindestens 90° versetzt zur ersten
Anzeigezone (30a,31,32,33a) am Aufbau (12) angeordnet sind, insbesondere um 120° versetzt.

9. Goniometer (11) nach einem der Ansprüche 1 bis 8,
**dadurch gekennzeichnet, dass**
der Aufbau (12) ein eine Neigungsachse definierendes Drehgelenk (19) aufweist, wobei die Neigungsachse senkrecht zur Stehachse (14) steht, insbesondere wobei dem Drehgelenk (19) ein weiterer Winkelencoder zur Bestimmung eines Neigungswinkels zugeordnet ist.

10. Goniometer (11) nach einem der Ansprüche 1 bis 9,
**dadurch gekennzeichnet, dass**
der Aufbau (12) eine Aufnahme zur Befestigung eines Beobachtungsgeräts (18) aufweist.

11. System (10) aus einem Goniometer (11), wobei das Goniometer ausgebildet ist zur modulartigen Aufnahme eines handhaltbaren Beobachtungsgeräts und zur Bestimmung dessen Azimutwinkels mit zumindest
• einer eine Stehachse (14) definierenden Basis (13),
• einem Aufbau (12), wobei der Aufbau (12) um die Stehachse (14) relativ zur Basis (13) rotierbar ist, und
• einem Winkelencoder (15) zur Bestimmung einer azimutalen Winkelstellung des Aufbaus (12) um die Stehachse (14) relativ zur Basis (13),
und dem auf den Aufbau (12) in einem definierten Positions- und Winkelbezug aufgesetzten Beobachtungsgerät (18) zur Anvisierung eines Ziels (50,52), wobei das Beobachtungsgerät (18)
• um die Stehachse (14) sowie insbesondere um eine Neigungsachse schwenkbar ist und
• eine Entfernungsmessfunktionalität aufweist, insbesondere wobei das Beobachtungsgerät (18) modulartig am Aufbau (12) befestigbar ist,
**dadurch gekennzeichnet, dass**
das System (10) ein grafisches elektronisches Informationswiedergabemittel (35) mit mindestens zwei Anzeigezonen (30a,30b,31,32,33a,33b) zur Anzeige einer einem Erreichen einer geeigneten Winkelstellung dienenden Benutzerführungsinformation (31a-c,32a-c), und insbesondere einer Messinformation, aufweist, wobei
• eine erste der mindestens zwei
Anzeigezonen (30a,31,32,33a) des Informationswiedergabemittels (35) in einer ersten radialen Ausrichtung relativ zur Stehachse (14) am Aufbau (12) oder am Beobachtungsgerät (18) angeordnet ist,
• eine zweite der mindestens zwei
Anzeigezonen (30b,31,32,33b) des Informationswiedergabemittels (35) in einer zur ersten radialen Ausrichtung unterschiedlichen zweiten radialen Ausrichtung relativ zur Stehachse (14) am Aufbau (12) oder am Beobachtungsgerät (18) angeordnet ist, wobei die erste radiale Ausrichtung und die zweite radiale Ausrichtung einen Winkel von mindestens 90° einschliessen, und
• die mindestens zwei
Anzeigezonen (30a,30b,31,32,33a,33b) durch eine Steuerungs- und Verarbeitungseinheit in Abhängigkeit von einem Erfüllen eines definierten Winkelstellungskriteriums durch die vorliegende azimutale Winkelstellung automatisch einzeln angesteuert werden.

12. System nach Anspruch 11,
**dadurch gekennzeichnet, dass**
das Goniometer (11) gemäss einem der Ansprüche 2 bis 10 weitergebildet ist.

13. Initialisierungsverfahren zum Ausrichtungsbestimmen eines Goniometers (11), wobei das Goniometer (11) ausgebildet ist zur modulartigen Aufnahme eines handhaltbaren Beobachtungsgeräts und zur Bestimmung dessen Azimutwinkels und aufweist
• eine eine Stehachse (14) definierende Basis (13),
• einen um die Stehachse (14) relativ zur Basis (13)
rotierbaren Aufbau (12),
sowie mit
• einem Aufstellen und groben Horizontieren des Goniometers (11),
• einem Bestimmen einer azimutalen Winkelstellung des Aufbaus (12) um die Stehachse (14) relativ zur Basis (13), insbesondere eines Azimutwinkels, und
• einem graphischen Anzeigen (30a,30b,31,32,33a,33b)
von Benutzerführungsinformation (31a-c,32a-c),
**dadurch gekennzeichnet, dass**
• bei einem Starten des Initialisierungsverfahrens oder durch ein definiertes Ausrichten der Basis (13) ein Benutzerwinkelbereich (42) definiert wird,
• das Ausrichtungsbestimmen durch ein zumindest zweimaliges Ausrichtungsmessen in zumindest zwei unterschiedlichen Initialisierungswinkelstellungen des Aufbaus (12) relativ zur Basis (13) erfolgt,
• zum Erreichen der jeweiligen
Initialisierungswinkelstellungen das graphische Anzeigen (30a,30b,31,32,33a,33b) der Benutzerführungsinformation (31a-c,32a-c) in mindestens zwei radialen Ausrichtungen derart automatisch gesteuert erfolgt, dass die Benutzerführungsinformation (31a-c,32a-c) nur in denjenigen radialen Ausrichtungen angezeigt wird, deren Richtungen innerhalb des Benutzerwinkelbereichs (42) liegen, und
• die mindestens zwei radialen
Ausrichtungen (30a,30b,31,32,33a,33b) einen Winkel von mindestens 90° einschliessen.

14. Initialisierungsverfahren nach Anspruch 13,
**dadurch gekennzeichnet, dass**
mittels des zumindest zweimaligen Ausrichtungsmessen eine Nordrichtung (20) abgeleitet wird.

15. Initialisierungsverfahren nach Anspruch 13 oder 14, **dadurch gekennzeichnet, dass**
im Rahmen des Initialisierungsverfahrens das Ausrichtungsmessen in drei Initialisierungswinkelstellungen erfolgt und ein Gütewert für die abgeleitete Nordrichtung (20) bestimmt wird.

## Claims

1. Goniometer (11), designed for modularly receiving a handheldable observation device and for determining its azimuth angle, having at least
- one base (13), which defines a standing axis (14),
- a structure (12), the structure (12) being rotatable around the standing axis (14) relative to the base (13),
- an angle encoder (15) for determining an angular position of the structure (12) relative to the base (13), and
- a control and processing unit,
**characterized in that** the structure (12) has a graphic electronic information display means (35) having at least two display zones (30a, 30b, 31, 32, 33a, 33b) for displaying user guidance information (31a-c, 32a-c) about reaching a suitable angular position and particular measuring information,
- a first of the at least two display zones (30a, 31, 32, 33a) of the information display means (35) being arranged in a first radial alignment relative to the standing axis (14) on the structure (12),
- a second of the at least two display zones (30b, 31, 32, 33b) of the information display means (35) being arranged in a second radial alignment, which is different from the first radial alignment, relative to the standing axis (14) on the structure (12), the first radial alignment and the second radial alignment enclosing an angle of at least 90°, and
- the at least two display zones (30a, 30b, 31, 32, 33a, 33b) being automatically individually activated by the control and processing unit as a function of a fulfilment of a defined angular position criterion by a current angular position.

2. Goniometer (11) according to Claim 1,
**characterized in that** at least one of the display zones (30a, 30b, 31, 32, 33a, 33b) is turned on or off upon fulfilment of the angular position criterion.

3. Goniometer (11) according to Claim 1 or 2,
**characterized in that** upon a startup of an initialization procedure, a user angle range (42) and/or an aiming angle range (41) is defined by an angular position of the structure (12) relative to the base (13) which is present upon starting,
- only the display zones (30a, 30b, 31, 32, 33a, 33b) whose radial alignments lie within the user angle range (42) displaying the user guidance information (31a-c, 32a-c), and/or
- at least one of the display zones (30a, 30b, 31, 32, 33a, 33b) is turned on or off in a manner controlled by the control and analysis unit as a function of a comparison of the current angular position of the structure (12) to the aiming angle range (41).

4. Goniometer (11) according to any one of Claims 1 to 3,
**characterized in that** at least one of the display zones (30a, 30b, 31, 32, 33a, 33b) is turned off in a manner controlled by the control and analysis unit if an angle threshold value associated with the radial alignment of the at least one display zone (30a, 30b, 31, 32, 33a, 33b) is exceeded because of a change of the angular position of the structure (12).

5. Goniometer (11) according to any one of Claims 1 to 4,
**characterized in that** the structure (12) has an at least partially polygonal footprint and the at least two display zones (30a, 30b, 31, 32, 33a, 33b) are respectively arranged on a face of the structure connecting each two corners.

6. Goniometer (11) according to any one of Claims 1 to 5,
**characterized in that** the structure (12) has an at least partially elliptical footprint and the at least two display zones (30a, 30b, 31, 32, 33a, 33b) are arranged on an outer lateral surface of the structure (12) corresponding to the elliptical footprint.

7. Goniometer (11) according to any one of Claims 1 to 6,
**characterized in that** the information display means (35) is implemented in a dimensioning enclosing the structure (12) along the outer lateral surface of the structure (12), in particular in a ring shape.

8. Goniometer (11) according to any one of Claims 1 to 7,
**characterized in that** the goniometer (11) additionally has a third display zone (31, 32), a user side being defined by the arrangement of the first display zone (30a, 31, 32, 33a) in the first radial alignment on the structure (12) and the second and third display zones (30a, 30b, 31, 32, 33a, 33b) each being arranged offset by at least 90° to the first display zone (30a, 31, 32, 33a) on the structure (12), in particular offset by 120°.

9. Goniometer (11) according to one of Claims 1 to 8,
**characterized in that** the structure (12) has a swivel joint (19), which defines an inclination axis, the inclination axis being perpendicular to the standing axis (14), in particular a further angle encoder for determining an inclination angle being assigned to the swivel joint (19).

10. Goniometer (11) according to any one of Claims 1 to 9,
**characterized in that** the structure (12) has a receptacle for fastening an observation device (18).

11. System (10) made of a goniometer (11), designed for modularly receiving a handheldable observation device and for determining its azimuth angle, the system (10) having at least
- one base (13), which defines a standing axis (14),
- a structure (12), the structure (12) being rotatable around the standing axis (14) relative to the base (13), and
- an angle encoder (15) for determining an angular position of the structure (12) relative to the base (13),
and an observation device (18), which is placed on the structure (12) in a defined position and angle relationship, for targeting a target (50, 52), the observation device (18)
- being pivotable around the standing axis (14) and in particular around an inclination axis and
- having a distance measurement functionality,
in particular the observation device (18) being modularly fastenable on the structure (12),
**characterized in that** the system (10) has a graphic electronic information display means (35) having at least two display zones (30a, 30b, 31, 32, 33a, 33b) for displaying user guidance information (31a-c, 32a-c) about reaching a suitable angular position and particular measuring information,
- a first of the at least two display zones (30a, 31, 32, 33a) of the information display means (35) being arranged in a first radial alignment relative to the standing axis (14) on the structure (12) or on the observation device (18),
- a second of the at least two display zones (30b, 31, 32, 33b) of the information display means (35) being arranged on the structure (12) or on the observation device (18) in a second radial alignment, which is different from the first radial alignment, relative to the standing axis (14), the first radial alignment and the second radial alignment enclosing an angle of at least 90°, and
- the at least two display zones (30a, 30b, 31, 32, 33a, 33b) being automatically individually activated by a control and processing unit as a function of a fulfilment of a defined angular position criterion by a current angular position.

12. System according to Claim 11,
**characterized in that** the goniometer (11) is refined according to any one of Claims 2 to 10.

13. Initialization method for alignment determination of a goniometer (11) designed for modularly receiving a handheldable observation device and for determining its azimuth angle, the goniometer (11) having
- a base (13), which defines a standing axis (14),
- a structure (12) rotatable around the standing axis (14) relative to the base (13),
and having
- a setup and coarse horizontal levelling of the goniometer (11),
- a determination of an angular position of the structure (12) relative to the base (13), in particular an azimuth angle, and
- a graphic display (30a, 30b, 31, 32, 33a, 33b) of user information (31a-c, 32a-c),
**characterized in that**
- a user angle range (42) is defined upon a startup of the initialization procedure or by a defined alignment of the base (13),
- the alignment determination is performed by at least two alignment measurements in at least two different initialization angular positions of the structure (12) relative to the base (13),
- to reach the respective initialization angular positions, the graphic display (30a, 30b, 31, 32, 33a, 33b) of the user guidance information (31a-c, 32a-c) is performed automatically controlled in at least two radial alignments in such a manner that the user guidance information (31a-c, 32a-c) is only displayed in the radial alignments whose directions lie within the user angle range (42), and
- the at least two radial alignments (30a, 30b, 31, 32, 33a, 33b) enclose an angle of at least 90°.

14. Initialization method according to Claim 13,
**characterized in that** a north direction (20) is derived by means of the at least two alignment measurements.

15. Initialization method according to Claim 13 or 14,
**characterized in that** the alignment measurement is performed in three initialization angular positions in the scope of the initialization procedure and a quality value for the derived north direction (20) is determined.

## Revendications

1. Goniomètre (11), configuré pour le logement de type modulaire d'un appareil d'observation pouvant être tenu à la main et pour la détermination de son angle d'azimut, avec au moins
• une base (13) qui définit un axe vertical (14),
• une structure (12), la structure (12) étant rotative autour de l'axe vertical (14) par rapport à la base (13),
• un codeur angulaire (15) pour déterminer une position d'angle azimutale de la structure (12) autour de l'axe vertical (14) par rapport à la base (13) et
• une unité de commande et de traitement,
**caractérisé en ce que**
la structure (12) présente un moyen électronique de reproduction d'informations graphiques (35) avec au moins deux zones d'affichage (30a, 30b, 31, 32, 33a, 33b) pour l'affichage d'une information de guidage de l'utilisateur (31a-c, 32a-c) qui sert à atteindre une position d'angle appropriée et en particulier d'une information de mesure,
• cependant qu'une première des deux zones d'affichage (30a, 30b, 31, 32, 33a) du moyen de reproduction d'informations (35) est placée dans une première orientation radiale par rapport à l'axe vertical (14) sur la structure (12),
• qu'une seconde des deux zones d'affichage qui existent au moins (30b, 31, 32, 33b) du moyen de reproduction d'informations (35) est placée dans une seconde orientation radiale par rapport à l'axe vertical (14) sur la structure (12) différente de la première orientation radiale, la première orientation radiale et la seconde orientation radiale incluant un angle d'au moins 90°,
• qu'au moins deux zones d'affichage (30a, 30b, 31, 32, 33a, 33b) sont excitées séparément par l'unité de commande et de traitement en fonction du fait qu'un critère de position d'angle défini soit atteint par la position d'angle azimutale existante.

2. Goniomètre (11) selon la revendication 1,
**caractérisé en ce**
**qu'**au moins l'une des zones d'affichage (30a, 30b, 31, 32, 33a, 33b) est mise en circuit ou hors circuit lorsque le critère de position d'angle est rempli.

3. Goniomètre (11) selon la revendication 1 ou 2,
**caractérisé en ce que**, lors d'un démarrage d'un processus d'initialisation par une position d'angle de la structure (12) par rapport à la base (13) qui existe lors du démarrage, une plage d'angle d'utilisateur (42) et/ou une plage d'angle de visée est définie, cependant que
• seulement les zones d'affichage (30a, 30b, 31, 32, 33a, 33b) dont les orientations radiales se trouvent à l'intérieur de la plage d'angle d'utilisateur (42) affichent les informations de guidage de l'utilisateur (31a-c, 32a-c) et/ou
• au moins l'une des zones d'affichage (30a, 30b, 31, 32, 33a, 33b) est mise en circuit ou hors circuit en étant commandée par l'unité de commande et d'évaluation en fonction d'une comparaison de la position d'angle actuelle de la structure (12) avec la plage d'angle de visée (41).

4. Goniomètre selon l'une des revendications 1 à 3,
**caractérisé en ce**
**qu'**au moins l'une des zones d'affichage (30a, 30b, 31, 32, 33a, 33b) est mise hors circuit en étant commandée par l'unité de commande et d'évaluation lorsqu'une valeur de seuil d'angle respective, assignée à l'orientation radiale de la zone d'affichage qui existe au moins (30a, 30b, 31, 32, 33a, 33b), est dépassée, ceci étant du à un changement de la position d'angle de la structure (12).

5. Goniomètre selon l'une des revendications 1 à 4,
**caractérisé en ce**
**que** la structure (12) présente une surface de base au moins partiellement angulaire et que les deux zones d'affichage qui existent au moins (30a, 30b, 31, 32, 33a, 33b) sont placées respectivement sur une surface de la structure qui relie respectivement deux coins.

6. Goniomètre selon l'une des revendications 1 à 5,
**caractérisé en ce**
**que** la structure (12) présente une surface de base au moins partiellement elliptique et que les deux zones d'affichage qui existent au moins (30a, 30b, 31, 32, 33a, 33b) sont placées sur une surface d'enveloppe extérieure de la structure (12) qui correspond à la surface de base elliptique.

7. Goniomètre selon l'une des revendications 1 à 6,
**caractérisé en ce**
**que** le moyen de reproduction d'informations (35) est configuré dans un dimensionnement qui entoure la structure (12) le long de la surface d'enveloppe extérieure de la structure (12), en particulier en étant annulaire.

8. Goniomètre selon l'une des revendications 1 à 7,
**caractérisé en ce**
**que** le goniomètre (11) présente en plus une troisième zone d'affichage (31, 32), cependant qu'un côté utilisateur est défini par le placement de la première zone d'affichage (30a, 31, 32, 33a) dans la première orientation radiale sur la structure (12) et la seconde et la troisième zone d'affichage (30a, 30b, 31, 32, 33a, 33b) sont placées décalées sur la structure (12) en étant décalées respectivement d'au moins 90° par rapport à la première zone d'affichage (30a, 31, 32, 33a), en particulier en étant décalées de 120°.

9. Goniomètre selon l'une des revendications 1 à 8,
**caractérisé en ce**
**que** la structure (12) présente un pivot (19) qui définit un axe d'inclinaison, cependant que l'axe d'inclinaison est perpendiculaire à l'axe vertical (14), en particulier cependant qu'un autre codeur d'angle est assigné au pivot (19) pour déterminer un angle d'inclinaison.

10. Goniomètre selon l'une des revendications 1 à 9,
**caractérisé en ce**
**que** la structure (12) présente un logement pour la fixation d'un appareil d'observation (18).

11. Système (10) composé d'un goniomètre (11), cependant que le goniomètre est configuré pour le logement de type modulaire d'un appareil d'observation pouvant être tenu à la main et pour la détermination de son azimut, avec au moins
• une base (13) qui définit un axe vertical (14),
• une structure (12), la structure (12) étant rotative autour de l'axe vertical (14) par rapport à la base (13),
• un codeur angulaire (15) pour déterminer une position d'angle azimutale de
la structure (12) autour de l'axe vertical (14) par rapport à la base (13) et l'appareil de surveillance (18) posé sur la structure (12) dans une référence de position et d'angle définie pour viser une cible (50, 52), l'appareil de surveillance (18)
• étant pivotant autour de l'axe vertical (14) ainsi qu'en particulier autour d'un axe d'inclinaison et
• présentant une fonctionnalité de mesure de la distance, en particulier cependant que l'appareil de surveillance (18) peut être fixé de manière modulaire sur la structure (12),
**caractérisé en ce que**
le système (10) présente un moyen électronique de reproduction d'informations graphiques (35) avec au moins deux zones d'affichage (30a, 30b, 31, 32, 33a, 33b) pour l'affichage d'une information de guidage de l'utilisateur (31a-c, 32a-c) qui sert à atteindre une position d'angle appropriée, et en particulier d'une information de mesure,
• cependant qu'une première des deux zones d'affichage (30a, 30b, 31, 32, 33a) du moyen de reproduction d'informations (35) qui existent au moins est placée dans une première orientation radiale par rapport à l'axe vertical (14) sur la structure (12) ou sur l'appareil de surveillance (18),
• qu'une seconde des deux zones d'affichage qui existent au moins (30b, 31, 32, 33b) du moyen de reproduction d'informations (35) est placée dans une seconde orientation radiale par rapport à l'axe vertical (14) sur la structure (12) différente de la première orientation radiale ou sur l'appareil de surveillance (18), la première orientation radiale et la seconde orientation radiale incluant un angle d'au moins 90°,
• qu'au moins les deux zones d'affichage (30a, 30b, 31, 32, 33a, 33b) sont excitées séparément par une unité de commande et de traitement en fonction du fait qu'un critère de position d'angle défini est atteint par la position d'angle azimutale existante.

12. Système selon la revendication 11,
**caractérisé en ce**
**que** le goniomètre (11) est perfectionné selon l'une des revendications 2 à 10.

13. Procédé d'initialisation pour la détermination de l'orientation d'un goniomètre (11), cependant que le goniomètre est configuré pour le logement de type modulaire d'un appareil d'observation pouvant être tenu à la main et pour la détermination de son azimut et présente
• une base (13) qui définit un axe vertical (14),
• une structure (12) rotative autour de l'axe vertical (14) par rapport à la base (13)
ainsi qu'avec
• une mise en place et un ajustement grossier d'horizon du goniomètre (11),
• une détermination d'une position d'angle azimutale de la structure (12) autour de l'axe vertical (14) par rapport à la base (13), en particulier d'un azimut et
• d'un affichage graphique (30a, 30b, 31, 32, 33a, 33b) d'information de
guidage de l'utilisateur (31a-c, 32a-c),
**caractérisé en ce que**
• qu'une plage d'angle d'utilisateur (42) est définie lors d'un démarrage du processus d'initialisation ou par une orientation définie de la base (13),
• la détermination de l'orientation se fait par une mesure d'orientation au moins deux fois dans au moins deux positions d'angle d'initialisation différentes de la structure (12) par rapport à la base (13),
• pour atteindre les positions d'angle d'initialisation respectives l'affichage graphique (30a, 30b, 31, 32, 33a, 33b) de l'information de guidage de l'utilisateur (31a-c, 32a-c) se fait dans au moins deux orientations radiales en étant commandée automatiquement, que l'information de guidage de l'utilisateur (31a-c, 32a-c) n'est affichée que dans les orientations radiales dont les directions se situent à l'intérieur de la plage d'angle d'utilisateur (42) et
• qui incluent dans au moins deux orientations radiales (30a, 30b, 31, 32, 33a, 33b) un angle d'au moins 90°.

14. Procédé d'initialisation selon la revendication 13,
**caractérisé en ce**
**qu'**une direction du nord (20) est dérivée au moyen de la mesure d'orientation qui est effectuée au moins deux fois.

15. Procédé d'initialisation selon la revendication 13 ou 14,
**caractérisé en ce**
**que** la mesure d'orientation se fait dans le cadre du procédé d'initialisation dans trois positions d'angle d'initialisation et une valeur qualitative est déterminée pour la direction du nord dérivée (20).
